Europäisches Patentamt

European Patent Office

Office européen des brevets

(19)

(11) **EP 1 199 791 A2**

(12) # EUROPEAN PATENT APPLICATION

| | | |
|---|---|---|
| (43) | Date of publication:<br>**24.04.2002 Bulletin 2002/17** | (51) Int Cl.$^7$: **H02M 3/335** |

(21) Application number: **01308661.6**

(22) Date of filing: **10.10.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | • **Kinghorn, Michael John**<br>  **Ripon, North Yorkshire HG4 3TA (GB)** |
| (30) Priority: **12.10.2000 GB 0025014** | (72) Inventor: **Kinghorn, Michael John**<br>  **Ripon, North Yorkshire HG4 3TA (GB)** |
| (71) Applicants:<br>• **GSPK Electronics Limited**<br>  **Knaresborough, North Yorkshire HG5 8LF (GB)** | (74) Representative: **Alton, Andrew**<br>  **Urquhart-Dykes & Lord**<br>  **Tower House**<br>  **Merrion Way**<br>  **Leeds LS2 8PA (GB)** |

(54) **Power converter circuitry**

(57)     Power converter circuitry includes a switch mode converter stage and a controller controlling the converter stage and including a digital signal processor. The width of switching pulses applied to the converter stage are controlled by the digital signal processor so as to control an output current from the converter stage.

FIG. 1

## Description

The present invention relates to electrical circuitry for power converter applications, and in particular to digital signal processor controlled, switch mode power converter circuitry and control methods.

Power converter circuitry is used to convert mains supply electrical power into a different form for supply to a load. Switch mode power converters tend to generate a significant amount of electromagnetic interference (EMI) (ie high frequency noise) and supply current harmonics (ie harmonic distortion of the input current at mains frequency) which must be attenuated to ensure that the supply is not disrupted by the power converter. Filters can be used to reduce EMI and supply current harmonics can be reduced by a switching stage separate to the power converting switching stage. Such ancillary circuitry and components are therefore provided with power converter circuitry so as to reduce the effect of the power converter on the supply. However, this ancillary equipment increases the cost of power converter devices. There is therefore a need for a simple power converter circuitry having a minimum of ancillary circuitry while still providing a full functionality.

According to a first aspect of the current invention, there is provided power converter circuitry, including:

a switch mode converter stage; and
a controller controlling the converter stage and including a digital signal processor, in which the switching pulses applied to the converter stage are controlled by the digital signal processor so as to control an output current from the converter stage.

Many applications of power converters require both conversion of electrical power from a mains supply to a different form, and also require the converted power to be controlled in some way. The prior art requires a mixture of analogue and digital circuitry to control the power conversion and a microprocessor or microcontroller to perform the additional control function. The present invention obviates the need for separate power conversion and control function systems by providing a digital signal processor based controller to perform both the power conversion and additional control functions.

The term digital signal processor is considered to cover any electronic device capable of providing a digital signal processing function. For example, the digital signal processor can be a specialised microprocessor or can be provided by a general microprocessor device configured to provide a digital signal processing functionality.

The controller can control the switching so as to reduce the noise generated by the circuitry. In this way, electromagnetic interference can be reduced without an additional switching stage.

The width of the switching pulses can be controlled. The phase of fixed width switching pulses can be controlled. The frequency of switching pulses can be controlled. These latter two control techniques are applicable when a resonant converter topology is used.

The frequency of the switching pulses can be varied so as to reduce electromagnetic interference. The controller modulates the switching frequency so that noise generated by the switching events is spread over the frequency spectrum thereby reducing the peak noise generated by the circuitry.

The controller can control the converter circuitry so as to reduce the input current waveform distortion. Single stage switch mode converters typically have a significant input waveform distortion. The need for a separate converter stage to correct the phase factor and generation of supply current harmonics can be obviated be the present invention.

The controller can control the mains input current to follow a waveform synchronised with the mains input current to provide both phase factor and supply harmonic correction. Preferably the waveform is substantially haversinusoidal.

Preferably, the switching stage handles unsmoothed rectified electrical power. The circuitry can include an unsmoothed rectifier supplying an input voltage to the converter stage. Eliminating smoothing capacitors from the circuitry reduces costs and also reduces the effect of the circuitry on the mains supply.

In some applications, such as a programmable DC power supply, smoothing capacitors can be required. In which case, the controller will handle two stages. One for phase factor correction, and one for power conversion. Such circuitry will still have the advantages of reduced component number for the control circuitry and EMI reduction.

Preferably, the circuitry is DC isolated. This provides a means for protection against electric shock. It also provides isolation from earthing or supply phase voltages where required in various applications. Further, a DC isolation topology allows for multiple outputs from a single switching stage.

The circuitry can include synchronisation circuitry enabling the width and timing of the switching pulses to be controlled such that the waveform of an input voltage to the converter stage and the waveform of an input current to the converter stage are synchronised to provide a substantially unity phase factor. This helps to reduce the effect of the circuitry on the mains supply.

The circuitry can include measurement circuitry measuring the average switching current. The average switching current is measured to provide a feedback signal which is used by the controller to accurately control the switching.

The circuit can include an output stage including a transformer having a primary winding, in which the switching current passes through the primary winding. The transformer output stage provides DC isolation between the mains supply and the load.

Preferably, the converter stage has a full bridge topology. The full bride topology includes to pairs of switches gated by the controller. Any type of controllable switching device is suitable, but preferably the switches are transistors and more preferably MOSFETs.

The circuitry can include electrical circuitry providing an inner control loop which controls the switching current and an outer control loop which controls the output generated by the circuitry. In this way, switching can be accurately controlled by the inner loop and the outer loop can control the power supplied by the converter.

The circuitry can provide single phase or three phase power conversion.

According to a second aspect of the invention there is provided a battery charger, including power converter circuitry according to the first aspect of the invention.

According to a third aspect of the invention, there is provided a method of controlling switch mode converter circuitry, including the step of using a digital signal processing controller to provide gating signals to the converter circuitry so as to control the output of the converter circuitry. In this way the control of both switching events and the overall power converter function can be controlled by a single control system thereby obviating separate control systems and the components required in them.

An embodiment of the invention will now be described, by way of example only, and with reference to the accompanying drawings, in which:

Figure 1 shows a block diagram of a single phase battery charger including power converter circuitry according to the present invention;

Figure 2 shows a block diagram of a DSP controller part of the power converter circuitry included in Figure 1;

Figure 3 shows a circuit diagram of the power handling parts of the charger shown in Figure 1; and

Figures 4a, b, c, d and e respectively show timing diagrams illustrating the DSP timer value, switching signals, output transformer primary voltage and integrator reset signal for various components in Figure 3.

The same items in different figures share common reference numerals unless indicated otherwise.

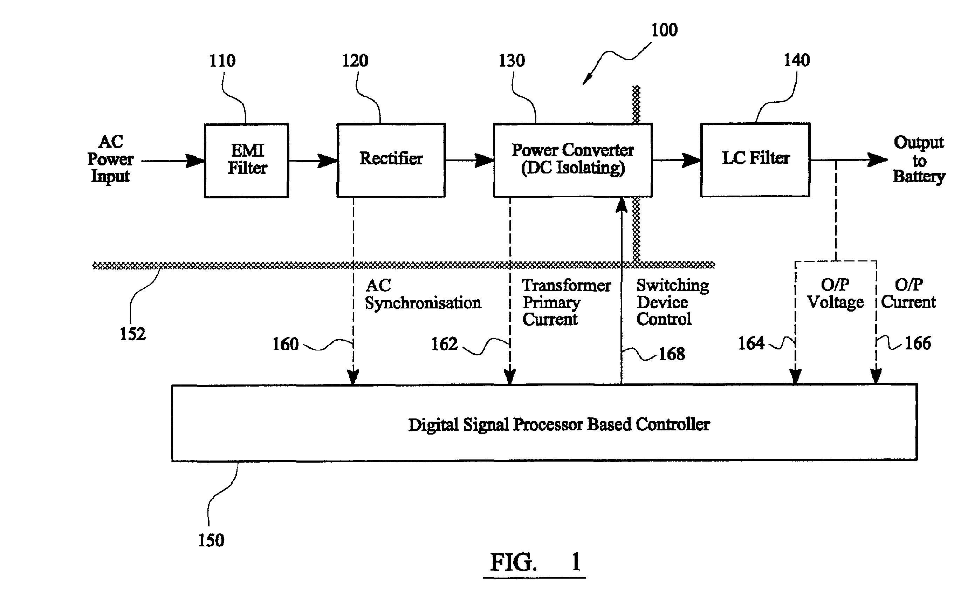

Figure 1 shows a block diagram of a battery charger 100 with a single phase electrical power input and including power converter circuitry according to the present invention. The battery charger includes a number of functional stages including an electromagnetic interference (EMI) filter stage 110, a rectifier stage 120, a switch mode converter stage 130, an LC filter stage 140 and a digital signal processor based controller 150.

Various signals are provided from the power handling components to the controller which is DC isolated 152 therefrom. The controller receives an AC synchronisation signal 160, a signal relating to the power converter switching current 162 and signals indicating the output voltage 164 and output current 166 being supplied as the output from the charger 100 to a battery. The controller, amongst other things, provides a switching control signal 168 which controls switching events in the power converter stage 130. DC isolation is provided between the controller 150 and the filter, rectifier and converter stages and between the converter stage and output LC filter stage.

In brief, the charger rectifies, DC isolates and converts the input electrical power to the necessary voltages and currents required to charge the battery effectively. The controller controls the power handling circuitry to provide the required battery charging algorithm which may include periods of constant voltage, constant power, constant current, or pulsed current depending on the battery type and application. It will be appreciated that the charger can be designed for various power requirements and that typical applications would require power outputs in the range of 250W to 3 kW.

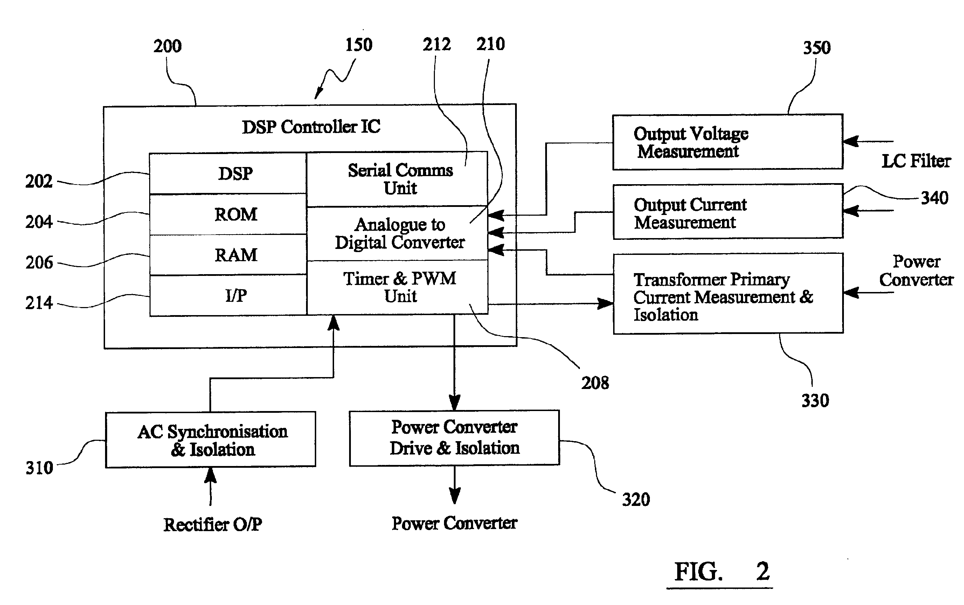

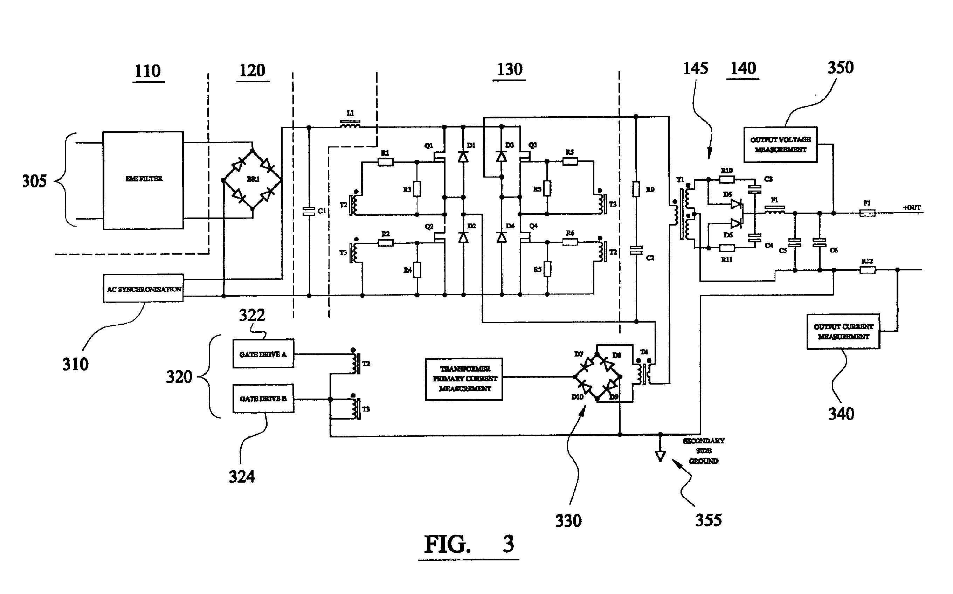

A more detailed description of the battery charger circuitry will now be given with particular reference to Figures 2 and 3.

Figure 2 shows the digital signal processor (DSP) based controller 150. The controller performs three main functions: control of the power converter stage, modulation of the converter switching frequency to reduce EMI emissions, and control of the general functioning of the charger unit, as required for a particular application. The operation of the controller is controlled by software contained in read only memory.

The controller includes a digital signal processing integrated circuit 200 providing digital signal processing functionality 202 and including on-chip read only memory (ROM) 204, random access memory (RAM) 206, a timer system 208 capable of generating pulse width modulated signals, an analogue to digital converter 210, a serial communications interface 212, and digital inputs/outputs 214.

The processing capacity and clock frequency of the DSP chip are selected according to the desired switching frequency of the converter and the complexity of the control software. For example switching frequencies of 50 kHz are possible. Examples of suitable DSP controller chips are DSP56800 series chips manufactured by Motorola Inc or TMS320C24XX series chips manufactured by Texas Instruments Inc. The DSP controller could be implemented with discrete implementations of the above functions or as an ASIC based design incorporating the above functions.

The DSP controller 150 derives its DC power supply from the battery output. Before and after charging, the power is taken from the battery while during charge the power is supplied from the power converter. Voltage regulation circuitry provides the correct voltages for the operation of the integrated circuits and surrounding circuitry. In practice, the current consumption of the controller is low compared to the capacity of the battery and so does not present a significant drain. Also the DSP chip has a low power mode which is activated following charge to reduce drain levels further.

In addition to the DSP and peripheral functions, the controller 150 includes circuitry for DC isolation and conditioning of the measurement and control signals which interface to the power handling circuitry, details of which follow.

With reference to Figure 3, an EMI filter circuit 110 is provided and receives AC power from the power line input 305. The EMI filter circuit functions to attenuate the conducted-mode noise generated by the switching action of the power converter stage 130. The filter is required to ensure that the charger complies with conducted-mode noise EMI regulations, as the switching converter is a source of radio frequency noise.

The actual design of the filter circuit depends largely on the power of the converter and the particular EMI regulations the charger has to comply with. The particular design of a suitable filter circuit is not described in detail and is considered to be within the knowledge of a man of ordinary skill in this art. In practice the EMI filter could be implemented by a common-mode line filter. Typically such an implementation would consist of a configuration of common-mode and series-mode inductors with shunt capacitors, designed for the required attenuation and so as to provide low conduction losses and the necessary live to neutral DC isolation. The filter circuit can also include input transient voltage protection. However, an advantage of the invention is that it reduces the attenuation required of the EMI filter as will be described later.

The rectifier stage 120 is a standard single phase, full wave bridge rectifier BR1 comprising four diodes. Alternatively, a single bridge rectifier component could be used. The component values are selected for the appropriate current and voltage requirements of the charger. The rectifying stage provides an output in the form of an unsmoothed rectified voltage. As the converter circuitry works on an unsmoothed signal, the smoothing capacitors present in prior art power converter circuitry are eliminated. Eliminating the need for smoothing capacitors has advantages in reducing the cost of the circuitry and in improving the power factor <u>and harmonic distortion</u> in the supply line current. Further, the absence of smoothing capacitors helps to minimise any in-rush current which occurs in prior art circuitry when it is connected to a supply voltage. Additional circuitry is required in order to limit excessive in-rush current, which is obviated by the absence of smoothing capacitors in the invention.

AC synchronisation circuitry 310 monitors the output from the rectifier and provides control signals to the controller as will be described subsequently.

A capacitor C1 is connected in parallel across the rectifier output and an inductor L1 is provided in series. The capacitor C1 provides no significant smoothing effect and has a capacitance of order, or less than, 1 microfarad. Typical values for a smoothing capacitor would be at least a few hundred microfarads. A smoothing effect can be considered to occur when the rate of discharge of the capacitor is less than the rate of change of the applied voltage. The values of inductor L1 and capacitor C1 are selected to help reduce the production of EMI by the converter stage. L1 reduces the peak currents from leakage inductance and so acts on a cause of EMI. Energy stored in the leakage inductance from the output transformer needs controlling to reduce the EMI generated by subsequent circuitry. Inductor L1 co-operates with capacitor C1 to allow current to be dumped in capacitor C1.

The switch mode converter stage 130 has a full bridge switching converter topology. MOSFETs Q1, Q2, Q3 and Q4 provide pairs of switching elements, Q1 & Q4 and Q2 & Q3. A gate signal is applied via transformers T2 and T3 which provide an inductive coupling to drive signals generated by controller 150 and gate drive circuitry 320.

An output stage 145 includes a transformer T1 the primary coil of which is connected in series with the output from the switching stage 130. The voltage input to the converter is unsmoothed rectified AC in contrast to low ripple direct current as used in conventional converters. The power conversion process is directly controlled by the DSP controller. The DSP controller generates the required pulse width modulated gate signals, measures the current in the output transformer primary coil, the output current and output voltage, and performs a number of feedback control functions.

The circuitry includes an inner feedback control loop which controls the average converter switching current flowing in the output transformer primary so as to maintain a haversinusoidal current waveform in phase with the input voltage waveform. This achieves input supply line phase factor and harmonic compliance. The detailed operation of the converter and control method is described later.

An LC filter circuit 140 is provided as part of the output stage of the convertor. The switch mode converter 130 is fed with rectified AC and the inner control loop maintains a haversinusoidal input current in the primary coil of the output transformer such that the output current also has a haversinusoidal waveform. The LC filter converts the high frequency switching pulses into a low frequency haversinusoidal output current. The LC filter therefore requires an appropriate low frequency dynamic response. Further, a suitable filter can readily be provided because of the large difference in AC supply and converter switching frequencies.

The waveform of input current at the primary coil managed by the inner control loop can be substantially haversinusoidal provided the dynamic response of the inner feedback loop is adequate for it to follow the rapid change in duty cycle required to allow for the energy stored in L2 and C1 to be released on the down-going part of the cycle. Appropriate control can be achieved with PID and in some circumstances P only control.

In the event that the dynamic response is not adequate, eg when using P only in certain circumstances, then the waveform should not be exactly haversinusoidal, and should be corrected to compensate for the energy stored in the power converter output inductor L2 and the leakage inductance energy returned into C1.

The AC synchronisation and isolation circuitry 310 monitors the rectified AC waveform from the rectifier stage 120 and generates a stream of narrow pulses. A pulse is generated when the haversine voltage waveform descends below approximately 10 volts. With a typical supply input voltage between 120-230V $\pm$ 20% at 50 or 60 Hz, pulse widths of between 326 and 784 microseconds can be generated. An optocoupler is used to transfer the signal from the high voltage to the low voltage side of the isolation barrier. The signal is then fed into a capture channel on the DSP timer unit 208. The capture channel records the time of occurrence of both the rising and falling edges of the pulses. This information is used by the DSP to determine the mains frequency, mains zero cross timing and an approximation of the input voltage applied.

The pulse width is calculated as follows:

$$\text{Pulse width} = t \text{ (falling edge)} - t \text{ (rising edge)}$$

i.e. by subtracting the time at which a rising edge occurs from the time at which the subsequent falling edge occurs.

The zero cross of the mains supply signal is determined as follows:

$$\text{zero cross} = t \text{ (rising edge)} + \text{pulse width}/2$$

i.e. the time of a zero cross event is given by the time of the rising edge of a pulse plus half the pulse width, as the haversine voltage is symmetric about the zero cross time.

The mains supply frequency is determined as follows:

$$\text{Supply frequency} = 1 / \text{zero cross}(t) - \text{zero cross}(t-1)$$

i.e. the supply frequency is the reciprocal of the difference in time of successive zero cross events.

The supply input voltage can be approximated by the following expression:

$$V_{in} = 10V / \sin(\text{pulse width x } \Pi \text{ x supply frequency})$$

ie the peak input voltage is approximately equal to the synchronisation circuit threshold voltage divided by the sine of the pulse width in seconds, multiplied by pi, multiplied by the supply frequency in Hertz.

The approximated input voltage is used to detect low or high supply voltage conditions so that the unit can be shut down if it is outside set parameters as determined by the controller. The supply frequency and zero cross times are used by the DSP controller to implement the power converter inner feedback control loop as described later.

The power convertor drive and isolation circuitry 320 amplifies two pulse width modulated signals from output channels of the DSP timer unit 208 and transfers them across the isolation barrier via separate pulse transformers T2 and T3. Alternatively, an optical device such as an optocoupler can be used to transfer the gating signals across the isolation barrier. On the high voltage side of the isolation barrier, the pulse width modulated switching signals are used to gate the pairs of MOSFETs to provide the switching action in the power converter stage 130. As the power convertor is configured as a full bridge type, two independent signals are required to drive the four switches in respective pairs.

The power convertor output transformer primary current, is measured with current measuring circuitry 330. The isolated measurement circuitry 330 provides a means of measuring the transformer primary current during each conduction period in the power converter. A DC isolating current transformer T4 has its primary winding connected in the series with the output transformer's primary winding. The signal from the secondary winding of the current transformer is rectified by a bridge rectifier comprising diodes D7, D8, D9 and D10. The rectified output is fed into a resettable integrator circuit having a conventional operational amplifier based design. The output of the integrator circuit is then fed into an input channel on the ADC 210 of the DSP control unit. A signal 420 from the DSP timer unit 208 is used to control the integrator reset function.

Before the beginning of a conduction period the DSP holds the integrator in a reset condition. At the start of a conduction period, the reset condition is released and the integrator ramps up to a value of the integral of I x k with respect to time, where I is the current flowing in the output transformer primary and k is a constant determined by the circuit design. At the end of the conduction period the DSP measures the integrator output value via the ADC and then resets the integrator for the next measurement. The value measured by the DSP represents the integral of the current conduction waveform over time for that conduction period. This provides an accurate mean current measurement for the power convertor control method described later.

An alternative current measurement method includes feeding the rectified output from the secondary winding of the current transformer directly to an input channel of the DSP ADC unit 210. The DSP samples the current value at the centre of the conduction period. As the current waveform has the form of a linear ramp on step, the value at the centre of the conduction period will be the mean value of current over the whole conduction period. However, this method has less immunity from noise compared to that previously described.

An output current measurement circuit 340 is provided to measure the current output from the output transformer T1. The circuit measures the DC output current by means of a small value resistor R12 connected in series with the negative output terminal. The voltage drop across the resistor is amplified by a differential amplifier circuit and fed into a channel on the DSP ADC unit. The DSP samples this signal at regular intervals and provides noise reduction by averaging the value of the samples read. The output current measurement is used by the DSP as an input to the outer feedback control method described later.

An output voltage measurement circuit 350 is also provided to measure the DC output voltage. A potential divider is provided between the positive output terminal and a secondary side ground 355. The values of the components in the voltage divider are selected such that the divided voltage is of a suitable level to be fed directly into a channel on the DSP ADC unit. The DSP samples the signal at regular intervals and provides noise reduction by averaging the value of the samples read. The output voltage measurement is subsequently used by the DSP as an input to the outer feedback control method described later.

The operation and control of the battery charger 100 will now be described. The operation of the charger can be broken down into three levels: top level control of the charger function; intermediate level feedback control of the power delivery mode; and low level inner feedback control of the converter circuitry 130. The DSP controller 150 manages the three levels as pseudo-concurrent processes using interrupt controlled software.

The operation of the top level control of the charger functions depends largely on the application and type of charger unit. The functionality supported will include sensing the battery presence using the output voltage measurement and executing a charging algorithm to apply power to the battery in one of several power delivery modes. The algorithm will also monitor the battery's charge state and control the charging process accordingly. The top level software routine passes parameters to the intermediate level code to select the power delivery mode and desired output level. The intermediate level in turn passes parameters back to the top level routines including output voltage and output current values and error messages.

The intermediate level code takes commands from the top level code and implements outer feedback control for a number of delivery modes for the power convertor. The power delivery modes are: constant current, constant voltage, constant power, current pulse and current taper. Apart from the current pulse mode, each mode is controlled by the intermediate level code using a proportional-integral-derivative (PID) control method. Output voltage and output current measurement information is fed back so as to allow control of the power convertor stage via the low level software. Current pulse mode power delivery is achieved by the top level code providing on/off commands to the intermediate level code while operating in a constant current mode.

The controller can provide a simple proportional only (ie without integral and derivate components) control method for power delivery control which simplifies the software, but has an inferior dynamic response compared to the PID method. However, full PID control is preferable if a fast dynamic response is required.

The intermediate level code controls the power convertor output level by passing a current demand value to the low level code which directly controls the convertor to meet that current demand value. The low level code also performs the ADC conversions for measurements and passes the measured values back to the intermediate level code as parameters. The low level code implements an inner feedback control of the power convertor. The code generates the convertor switching signals performs the ADC measurements and implements the inner feedback control loop which operates the converter switching so as to act as a constant current source. In addition, the controlling algorithm maintains a haversinusoidal input current waveform, in phase with the input voltage and also modulates the PWM carrier frequency to help reduce EMI. A more detailed description of aspects of the control method follows.

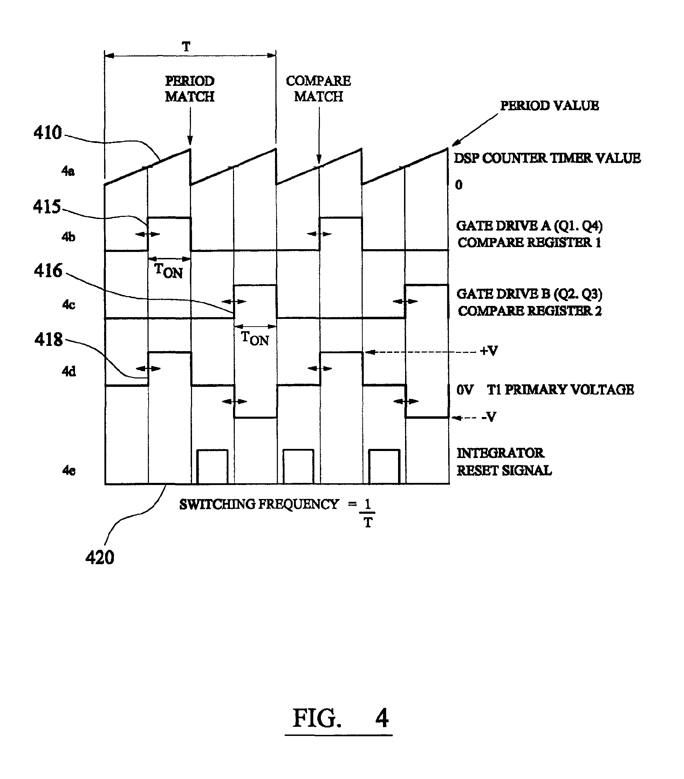

Figures 4a to e show the time variation of various signals in the system. Timer unit 208 generates a switching frequency signal 410 with period T. A counter in the DSP timer unit 208 is programmed to repeatedly count from zero to a predefined period value. The period value is equal to the counter clock frequency divided by the converter switching frequency multiplied by two ie $T_{clk}/(2F_{sw})$. Therefore the counter counts from zero to the period value twice within one switching cycle as shown in Figure 4a.

During the first counting period, a counter compare register in the DSP timer unit generates a gate drive signal for $Q_1$ and $Q_4$ (see Figure 4b). During the second counting period a second counter compare register generates a gate drive signal for $Q_2$ and $Q_3$ (see Figure 4c). The counter compare registers are programmed with the desired pulse widths for each conduction period. The pulse width values programmed into the compare registers are determined as a percentage of the defined period value of the counter. The pulse widths should not exceed more than approximately 80% of the period value. The maximum width value prevents the switching device pairs conducting simultaneously (dead band time). For additional safety, hardware is provided within the power converter drive and isolation circuitry 320 to prevent simultaneous drive of the switching device pairs. A third timer compare register generates the integrator reset signal 420 shown in Figure 4e.

As discussed above, the timer unit 208, generates a gate drive signal 415 for a first pair of switches Q1,Q4 and a gate drive signal 416 for the second pair of switches Q2,Q3 is generated. The gate drive switching signal waveforms are shown in Figures 4b and 4c respectively. Gate drive signal 415 causes MOSFETs Q1 and Q4 to conduct when high and Q1 and Q4 stop conducting when it is low. Similarly, switching signal 416 gates the second pair of MOSFET switches Q2 and Q3 to conduct when high and not to conduct when low.

By variation of the gate drive pulse widths ($T_{on}$) the DSP controls the average current in the primary of the output transformer T1. Figure 4d shows the time variation of the voltage 418 across the primary of T1. The value of this inductor current is fed back to the DSP via the current measuring circuitry 330 and measured by the DSP's ADC. Software controls the controller such that the DSP obtains the mean value of current for the conduction period for each pair of switches. In each switching cycle, there are two conduction periods the first is when gate drive A 322 is on and the dot end of T1 is connected to the positive input voltage rail. The second is when gate drive B 324 is on and the dot end of T1 is connected to the negative input voltage rail.

In a full bridge switching converter topology, it is important that the mean current in the first and second conduction periods is kept equal to prevent a flux imbalance condition occurring in the output transformer. If such a condition occurs, it can destroy the switching devices. The DSP prevents a flux imbalance condition from occurring by using two software implemented PID feedback loops to control the first and second conduction periods respectively as independent current sources, with a common programmed value. The measured value of the power converter switching current is fed back to allow the width of the gate signals to be controlled so as to balance the A and B conduction currents and maintain the output current in the T1 primary coil at the programmed value.

The programmed value of the current sources is varied with a haversine wave shape, the amplitude of which is determined by the current demand parameter which is passed from the intermediate level code to the low level code. The haversine shape is produced by the DSP using a calculation or look-up table and is synchronised so as to coincide with the supply zero cross point and frequency as derived from the AC synchronisation circuitry 310. This ensures that the output current waveform supplied from the power convertor to the output transformer is in phase with the input voltage waveform and has an average value determined by the current demand parameter. This provides a near unity input current phase factor thereby eliminating the need for phase factor correction stage control circuitry as required by conventional power converter circuitry.

Synchronising a digitally generated waveform with the incoming mains to achieve power factor correction has the advantage that an analogue representation of the mains waveform does not need to be sampled. This is important in applications were DC isolation is required and the control circuitry is on the isolated side. No complex circuitry is required by the current invention to carry the input waveform across the isolation barrier. A further advantage is that the technique of generating a waveform is largely independent of the switching topology used and can be applied to different converter types quite readily. This is not the case for other power factor correction schemes.

The inner feedback loop operates the power converter as a constant current source. However, the inner feedback is from the primary side of the output transformer.

Measurement inaccuracies and errors caused by transformer magnetising currents can degrade the performance of the current source as seen from the load. Hence the outer control loop provided by the intermediate level code utilising the measured output voltage and current values is required to provide a constant current power delivery mode.

The power converter circuitry is controlled to operate in a average cycle current mode. The current integrator circuitry and software control of the inner control loop in particular provide an average cycle current control method in which an average current value is correctly followed on a cycle-by-cycle basis. This provides a method of dynamically controlling the output current which has good noise immunity, accurately follows the desired average current and has good dynamic performance. Such a control method would be very complex to implement by analogue circuitry.

The low level code also modulates the carrier frequency of the PWM gating signals. The period T of the PWM switching frequency generated by the timer unit 208 is varied by a small amount. The frequency modulating signal may be random noise, triangular or any other suitable waveform and is generated by the software by calculation or look-up tables. By modulating the PWM carrier frequency, the EMI noise is spread over the spectrum therefore reducing the attenuation required of the EMI filtering stage. In conventional systems having a single switching frequency, a peak in EMI noise at the switching frequency and harmonics thereof are generated requiring significant attenuation by the EMI filter in order to meet regulatory requirements. A 10% random noise modulation can typically attenuate peak EMI values by -10dB to -15dB.

As discussed in the foregoing, the output from the rectifier stage is unsmoothed and no large value smoothing capacitor is connected across the output of the rectifier. Instead inductor L1 and capacitor C1 are provided. Capacitor C1 has a low value (e.g. less than 1 microfarad) and provides no significant smoothing effect on the output of the rectifier. Rather, it provides a sink for the energy stored in the output transformer primary leakage inductance which is released at the end of each conduction period. During the switching cycle when the first or second pair of switches is turned off, a small amount of energy stored as flux in the transformer is not coupled to the secondary winding and returns to the primary winding. When this occurs the voltage across the primary winding reverses from that of the previous conduction period and diodes D1 and D4 or D2 and D3 are forward biassed and conduct the current via L1 into C1. L1 limits the peak value of transient current at this point which helps to reduce EMI. The small charge stored in C1 is dissipated during the next conduction period.

Snubber components, R9 and C2, R10 and C3, and R11 and C4 are provided to reduce switching stress on the switching devices as will be understood by a man of ordinary skill in the art.

The battery charger circuitry shown in Figure 3 is for a single phase power supply. The power converter circuitry according to the present invention is also suitable for use with a three phase supply, but with some modification of some of the functional blocks as shown in Figure 1. The EMI filter circuit 110 is modified for three power lines. This will typically include three wire common mode inductors and shunt capacitors between each of the phases. Series mode inductors and transient suppression devices may also be provided. The rectifier stage 120 is a standard three phase full wave bridge rectifier using six diodes or alternatively a single bridge rectifier component. Again, the component values are selected for the appropriate current and voltage requirements. The power convertor switching stage 130 remains unchanged for three phase operation. However, the power convertor is operated in a different manner under control of the DSP controller circuitry 150. The LC filter output stage 140 is designed for DC output current, rather than the haversine current waveform produced by the single phase embodiment. The design of a suitable switch mode convertor LC output filter is considered to be within the knowledge of a man of ordinary skill in this art and so has not been described in detail.

The DSP controller 150 for three phase use is identical to the single phase implementation, except the AC synchronisation and isolation circuitry 310 is not required and the low level control software is modified. The AC synchronisation circuit in a three phase system is replaced by an input power monitor circuit which simply detects that all three input phase voltages are present and above a predefined threshold. Phase synchronisation is not required in the three phase implementation because the DSP does not need to perform the phase factor correction algorithm described for the single phase implementation. Systems using three phase bridge rectification can generally achieve compliance to power line harmonic standards without active phase factor correction.

The output from the rectifier section, when all phase input voltages are equal, is a DC voltage with approximately 14% ripple content (peak to peak ripple as a percentage to mean voltage). The input power monitor circuit tests that this voltage is above the defined threshold and generates a logic signal on the low voltage each side of the isolation barrier via an optocoupler. This is fed into a general purpose digital input on the DSP controller 200. The logic signal is asserted when the voltage is above this threshold and negated when below it. The controller uses this as a "healthy" indication to determine if it is safe to begin power delivery and to shut down the charger if the supply becomes faulty. The circuit can detect an overall reduction in supply voltage to below the set threshold, or a reduction in any one of the phase voltages. In the latter case, the ripple content of the rectifier output increases dramatically and the negative peaks of the ripple voltage fall below the power monitor circuit threshold. This will produce a stream of pulses at the DSP input.

The DSP controller operates the power convertor in a similar manner to the single phase implementation. The operation of the top level and intermediate level software is identical. However, the low level code operates the two constant current control loops for the first and second conduction periods with a constant value rather than a haversine varied value. This means that the ripple voltage present at the rectifier output will not produce a resulting ripple current because of the cancellation effect of the constant current function. The convertor therefore is operable as a DC constant current source and the current delivery to the source is DC. The absence of smoothing capacitors on the output of the bridge rectifier stage in this invention has the advantages of reducing both powerline harmonics and costs. Again, modulation of the switching carrier frequency is used, as in the single phase implementation, to reduce EMI emissions.

Although the power converter circuitry has been described above with particular reference to a battery charger application, it will be appreciated that the invention can be exploited in may devices in which power conversion functionality is required. For instance, the circuitry could be incorporated in a programable DC power supply, in metal plating power supplies, in which high DC currents need careful control, or in a hybrid vehicle battery charger.

Further, although a full bridge switch mode converter topology has been described, other power converter switching topologies, such as half-bridge, push-pull, flyback or forward converter topologies, could also be used in the circuitry of the invention.

The control techniques described above can be adapted for use with phase-shift controlled resonant converters. Phase-shift controlled resonant converters *per se* are known in the art and their operation in general is considered to be within the knowledge of a man of ordinary skill in this art. To control this type of converter, the DSP needs to generate two fixed width pulses and vary the phase between them.

This can be achieved by using two counter-PWM units. The period of the two counter units is set to the inverse of the converter switching frequency. A control signal is taken from one PWM channel of each of the two counter-PWM units. The PWM of these channels are set to be a fixed width which is less than 50% duty. The actual width set should take into account the dead-band required between switching pulses for the particular design of converter.

The DSP controls the converter output by setting the count-value of the two counters such that the desired phase shift is obtained between the two PWM signals. Under this type of operation, the average cycle current control is implemented in the same way as for the pulse-width varied systems. The integrator system measures the transformer primary current and the PID software feedback loop controls the phase instead of the width of the converter drive signals. This topology and control technique is particularly applicable to high power applications or where efficiency and switching losses are critical to the design.

## Claims

1. Power converter circuitry, including:

   a switch mode converter stage; and
   a controller controlling the converter stage and including a digital signal processor, in which the switching pulses applied to the converter stage are controlled by the digital signal processor so as to control an output current from the converter stage.

2. Circuitry as claimed in claim 1, in which the width of the switching pulses is controlled.

3. Circuitry as claimed in claim 1, in which the switching pulses are controlled by the controller so as to reduce electromagnetic interference generated by the circuitry.

4. Circuitry as claimed in claim 1, in which the frequency of the switching pulses is varied so as to reduce electromagnetic interference.

5. Circuitry as claimed in claim 1, in which a waveform synchronised with an input current provides phase factor and/or supply harmonics correction.

6. Circuitry as claimed in claim 1, in which the controller controls the average current on a cycle-by-cycle basis.

7. Circuitry as claimed in claim 1, and including an unsmoothed rectifier supplying an input voltage to the converter stage.

8. Circuitry as claimed in claim 1, in which the circuitry is DC isolated.

9. Circuitry as claimed in claim 1, and including synchronisation circuitry enabling the width of the switching pulses to be controlled such that an input voltage to the converter stage and the input current to the converter stage are synchronised to provide a substantially unity input current phase factor.

10. Circuitry as claimed in claim 1, and including measurement circuitry measuring the average switching current.

11. Circuitry as claimed in claim 1, and including an output stage including a transformer having a primary winding, in which the output current passes through the primary winding.

12. Circuitry as claimed in claim 1, in which the converter stage has a full bridge topology.

13. Circuitry as claimed in claim 1, and including an inner control loop which controls the switching current and an outer control loop which controls the output generated by the circuitry.

14. Circuitry as claimed in claim 1, in which the circuitry provides single phase power conversion.

15. Circuitry as claimed in claim 1, in which the circuitry provides three phase power conversion.

16. Power converter circuitry substantially as hereinbefore described.

17. A battery charger, including power converter circuitry as claimed in any preceding claim.

18. A battery charger as claimed in claim 15, in which the controller controls both charger functionality and power converter control.

19. A method of controlling switch mode converter circuitry, including the step of using a digital signal processing controller to provide gating signals to the converter circuitry so as to control the output of the converter circuitry.

FIG. 1

FIG. 2

EP 1 199 791 A2

FIG. 3

**PERIOD MATCH**

**COMPARE MATCH**

**PERIOD VALUE**

410

4a

DSP COUNTER TIMER VALUE

0

415

4b

$T_{ON}$

GATE DRIVE A (Q1. Q4)
COMPARE REGISTER 1

416

4c

$T_{ON}$

GATE DRIVE B (Q2. Q3)
COMPARE REGISTER 2

418

4d

+V

0V   T1 PRIMARY VOLTAGE

-V

4e

INTEGRATOR
RESET SIGNAL

SWITCHING FREQUENCY $= \dfrac{1}{T}$

420

FIG.   4